# EUROPEAN PATENT APPLICATION

(11) **EP 3 293 676 A1**
(43) Date of publication of application: **14.03.2018**
(21) Application number: 16188275.8
(22) Date of filing: 12.09.2016
(51) Int. Cl.: G06K 19/07, G06K 19/077

(54) **ENVIRONMENTAL OR PHYSICAL EXPOSURE DETECTION THROUGH REACTANCE AND TEMPERATURE MONITORING OF A SENSOR**

(71) Applicant: 3M Innovative Properties Company, Saint Paul, MN 55133-3427 (US)
(72) Inventor: Muenstermann, Benjamin, 47055 Duisburg (DE); Weinmann, Christian, 52477 Alsdorf (DE); Kühneweg, Bernd, 40468 Duesseldorf (DE); den Drijver, Andrea, 47445 Moers (DE); Neshataev, Ivan, 47058 Duisburg (DE); Tesch, Walter, 41466 Neuss (DE); Zohaib, Hameed, Saint Paul, MN 55108 (US); Mohsen, Salehi, Woodbury, MN 55125 (US)
(74) Representative: Bergen, Katja

(57) **Abstract**

The present disclosure provides A method for monitoring the surface of a device to physical and/or environmental exposure, the method comprising:
(a) Attaching at least one sensor including a reactance autotuning integrated circuit to a surface of a device;
(b) attaching a reader in proximity to the sensor;
(c) measuring a reference reactance of the sensor with the reader at a selected frequency;
(d) continually monitoring for changes in the reactance of the sensor at the selected frequency, wherein changes to the reactance are digitized by the autotuning circuit; and
(e) comparing differences between the reference reactance and changes to the monitored reactance to determine if said surface of the device has been subjected to physical and/or environmental exposure.

## Description

### Field

The disclosure relates to a method for monitoring the surface of a device, in particular a blade of a wind turbine, to physical and/or environmental exposure. The present disclosure further relates to a sensing system for carrying out the method according to the present disclosure.

### Background

The monitoring of surfaces to physical or environmental exposure has been for a long time an important challenge for the developers and users of applications and installations. Physical and environmental exposure may lead to significant changes of structural properties of devices itself as well as of other significant physical properties of devices. For some applications, installations and devices, these changes may not only give rise to economical, but also to safety concerns. This may be exemplified by a wing of an aircraft and a blade of a wind turbine. For instance, the formation of cracks in a wing of an aircraft is a significant and immediate safety concern. Similarly, it has long been known that the formation of ice on a wing of an aircraft may not only lead to a blockage of important steering devices such as flaps, but also to a significant deterioration of aerodynamic properties such as a critical drop of lift the wing provides. Both represent immediate safety risks. In particular, the formation of ice on aircraft wings was recognized as safety risk in the early pioneering age of motorized flight, and various counter-measures have been developed since, e.g. the spraying of anti-icing liquids and the provision of heating installations within wings. Thus, the observation of damages and/or the formation of ice on the surface of a wing represent most critical safety issues during the operation of an aircraft, in order to be able to initiate immediate countermeasures.

The safety risks of operating wind turbines arise from their ever-growing proportions and sometimes their proximity to inhabited areas. Apart from physical damage such as the development of cracks, the formation of ice on the surface of the blades also represents a considerable safety risk. While the formation of ice may lead an increase of vibration, the larger risk arise from chunks of ice falling off traveling, given the considerable size and travel speed of the blade, large distances which then poses a serious threat when hitting objects, animals or even persons on the ground. Furthermore, the formation of ice on blades of a wind turbine may also lead to an increase of vibration and a decrease in lift, which both decreases the rotation speed and therefore the power output of the turbine. Generally, the formation of ice on the surface of blades of wind turbine (also known as "icing") may give rise to problems such as partial or complete loss of power production, reduction of power output due to altered or even disrupted aerodynamics, overloading caused by delayed stall, increased fatigue of components due to imbalance caused by the ice load, and/or damage or harm caused by uncontrolled shedding of large chunks of ice. Therefore, the formation of ice, cracks, or even accumulation of insects on the surface of the wings of a wind turbine trigger both economical and safety considerations.

Moreover, the monitoring of surfaces of blades of wind turbines face further challenges for the skilled person in that the blades consistently move, exhibit a large area. Furthermore,a wind turbines are often installed in large numbers in remote areas such as in so-called off-shore installations. Accordingly, visual inspections are close to impossible, and due to economical considerations, computer-aided electronical solutions are desirable.

US-Patent 5,942,991 describes an apparatus and a related method for remotely measuring at least one environmental condition including an electromagnetically resonant sensor having a measurable resonance characteristic which varies in correspondence to changes in the environmental condition present at the sensor.

Similarly, US 2007/0159346 A1 discloses a method of determining a condition of a blade of a wind turbine that includes a plurality of blades mounted to a rotor shaft of a turbine assembly supported atop a tower support, comprising: (a) securing a transponder including an RFID device to each of said blades, (b) providing a reader/receiver on or in the support tower, and (c) selectively at least one of (i) detecting operative said RFID devices and/or (ii) reading data from said RFID devices with said reader/receiver as said blades pass said tower.

Without contesting the achievements of the prior art, there still is the need for new effective methods and apparatus to monitor surfaces of devices, in particular blades of wind turbines, for physical and/or environmental exposure.

### Summary

In one aspect of the present disclosure, there is provided a method for monitoring the surface of a device, in particular the surface of a blade of a wind turbine, to physical and/or environmental exposure, the method comprising the following steps:
(a) Attaching at least one sensor including a reactance autotuning integrated circuit to a surface of a device, in particular the surface of a blade of a wind turbine;
(b) Attaching a reader in proximity to the sensor;
(c) Measuring a reference reactance of the sensor with the reader at a selected frequency;
(d) Continually monitoring for changes in the reactance of the sensor at the selected frequency, wherein changes to the reactance are digitized by the reactance autotuning integrated circuit; and
(e) Comparing differences between the reference reactance and changes to the monitored reactance to determine if the surface of the device, in particular the surface of the blade of the wind turbine, has been subjected to physical and/or environmental exposure.

In a further aspect of the present disclosure, there is provided a sensing system comprising
(i) At least one sensor including a reactance autotuning integrated circuit;
(ii) At least one reader configured to measure a reactance of the sensor at a selected frequency;
(iii) A processor configured to determine differences of reference reactances.

In particular, the sensing system is configured to carry out the method as described herein.

Without wanting to being bound by theory, it is assumed that by using the method as described herein comprising steps (a) to (e), it is possible to achieve an efficient and effective monitoring of surface for environmental and physical exposure. This is particularly advantageous for monitoring the surface of blades of wind turbines, which are particularly exposed to wind, erosion, insect accumulation, and ice formation. Therefore, the method comprising steps (a) to (e) is excellently suited for monitoring ice formation on blade surfaces and thereby helping to avoid loss of productivity and/or danger associated with ice throw.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

Unless explicitly stated otherwise, all embodiments of the present disclosure can be combined freely.

In a first aspect, the present disclosure provides a method for monitoring the surface of a device, in particular the surface of a blade of a wind turbine, to physical and/or environmental exposure, the method comprising the following steps:
(a) Attaching at least one sensor including a reactance autotuning integrated circuit to a surface of a device, in particular the surface of a blade of a wind turbine;
(b) Attaching a reader in proximity to the sensor;
(c) Measuring a reference reactance of the sensor with the reader at a selected frequency;
(d) Continually monitoring for changes in the reactance of the sensor at the selected frequency, wherein changes to the reactance are digitized by the reactance autotuning integrated circuit; and
(e) Comparing differences between the reference reactance and changes to the monitored reactance to determine if the surface of the device, in particular the surface of the surface of a device, in particular the blade of a wind turbine has been subjected to physical and/or environmental exposure.

Basically, any surface of a given device having at least one surface may be monitored by the method described herein. The device may be selected from a vehicle, a building, an installation, and a wind turbine. Preferably, the vehicle may be selected from aircraft, car, train, ship and truck. Since the part of interest of the device is the part which is mostly affected or exposed to physical and/or environmental exposure, it is preferred that the device is at least part of a wing of an aircraft, a blade of a rotor of an helicopter, or a blade of a wind turbine.

"Physical damage" as used herein as the meaning commonly used in the art, i.e. the occurrence of physical, in most cases undesirable, changes of the integrity of a device or structure. Hence, physical damage may include erosion, loss of at least part of the surface of said device, cracks within said surface, accumulation of dirt and/or accumulation of insects. Erosion may refer to a loss of matter of said surface over time. Since rotors of helicopters turn at high speeds, and the outer section of large and very large blades of wind turbines also travel at high speeds, impact with matter such as insects, birds, dirt, sand, hail or even rain may lead to erosion of the surface and the structure below. Erosion in these cases is particularly undesirable due to alteration of the aerodynamic properties and deteriorated structural integrity of said blades. The occurrence of cracks is also undesirable since cracks, in particular accumulation of cracks, may also jeopardize the structural integrity of the device, or also give rise to an accelerated erosion with the above-mentioned consequences.

"Environmental exposure" as used in the context of the present disclosure has also the meaning commonly used in the art, i.e. the exposure to the elements or to a combination of several elements, in particular the physical exposure to the elements. Exposure to the elements includes exposure to weather conditions. Weather conditions include rain, humidity, snow and the formation of ice on said surface. While the formation of ice on said surface is undesirable for the above-discussed reasons, the presence of rain may also be of high interest e.g. for the operation of a wind turbine. Rain in combination with high turning speeds, i.e. high speeds of the blade, may lead to increased erosion of the front edge of the blade. This phenomenon is known in the art as "rain erosion" and represents an economic factor. At the detection of rain, in particular at high turning speeds, it may be desirable for the operator of the wind turbine to lower the turning speed of the rotor in order to avoid increased erosion and/or to avoid immediate damage. Moreover, the presence of water, such as rain and/or humidity, may be indicative that the formation of ice on the surface of the device, preferably a blade of a wind turbine or a rotor of a helicopter, is either to expect or even presently occurring. Accordingly, monitoring weather conditions, in particular the formation of ice, rain, and/or humidity, is highly preferred in the present disclosure.

In the first step (a) of the method according to the present disclosure, at least one sensor including a reactance autotuning integrated circuit is attached to a surface of a device, such as a blade of a wind turbine. The reactance autotuning integraded circuit represents an integrated circuit which includes a reactance autotuning capacity. Preferably, the reactance autotuning integrated circuit comprises a radio frequency identification device (RFID). Typically, such a RFID unit comprises a semiconductor chip including radio frequency (RF) circuits, logic, memory, and at least one antenna. The reactance autotuning integrated circuit, in particular the RFID unit, functions in response to an RF signal, in particular to an uniquely coded RF signal. For instance, if the RFID unit is placed into an RF field including said RF signal, the RFID unit becomes stimulated and transmits a uniquely coded signal. Accordingly, it is preferred that the reactance autotuning integrated circuit is a passive device, preferably a batteryless device. This has significant advantages with regard to size, ease of application, as well as durability and serviceability, which is particularly important for applications in remote areas and/or large and very large blades of wind turbines.

Preferably, the reactance autotuning integrated circuit including the RFID sensing unit comprises a dipole antenna and an inductor, preferably to match the antenna impedance to the chip impedance. In one preferred embodiment, it is preferred that the inductance value of the inductor may be tuned by the magnetic properties of certain materials such as ferromagnetic materials or materials comprising ferromagnetic particles. For example, silicon carbide particles or ferromagnetic particles commercially available under Bayferrox powder (Bayer AG, Leverkusen, Germany) or Sendust. A loss of the material including said ferromagnetic particles gives rise to a decrease or increase of the turn-on-threshold (ToT) of the system. This would correspond to an existing or non-existing of the responsive material, which also corresponds to an information that erosion on this areas has taken place.

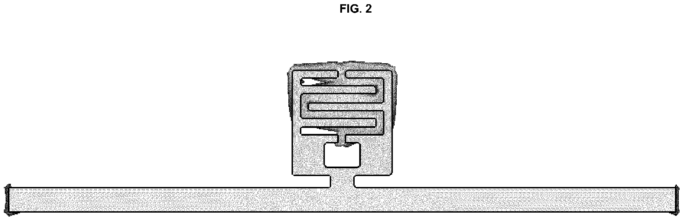

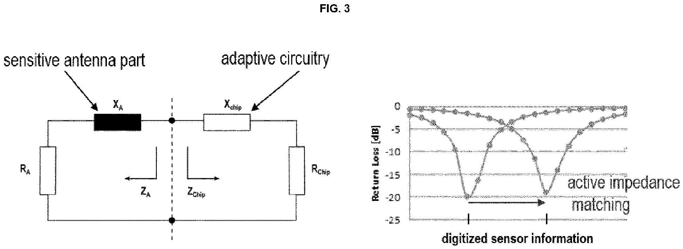

It is further preferred that the reactance autotuning circuit including an RFID sensing circuit comprises a dipole antenna and a variable input capacitor, which allows for optimizing the impedance matching to the connected RFID antenna/sensor structure (see, for instance, fig. 2). In fig. 3, the matching model of the resulting loss for all possible capacitances of a preferred chip are shown. Preferably, the autotuning function of the RFID chip minimizes the return loss and saves the encoded/digital value of the capacitance into the memory of the chip. This has the effect that indirect measurements of the antenna/sensor impedance may be carried out. This measurement principle has the further advantage that measurement of material presence having significant dielectric (i.e. epsr >1) or magnetic response (µᵣ >1) at the system frequency becomes possible. Accordingly, this allows the detection of wear or erosion of material.

It is particularly preferred that the reactance autotuning integrated circuit comprises a sensor having a capacitor element which changes if the field lines between the two electrodes are crossing high permittivity materials. High permittivity materials are these commonly known in the art, such as water having an epsᵣ of about 80. When the field lines between the electrodes of said capacitor element are crossing high permittivity materials such as water, the capacitance of the antenna part increases. This increase of the antenna capacitance will be compensated by a decrease of capacitance of said autotuning integrated circuit. Accordingly, this is equivalent to a digitized capacitance value, and in the present example, which will also result in a lower sensor code. Accordingly, it becomes possible to detect the presence of water with said reactance autotuning circuit. Moreover, the dielectric properties of water change drastically at UHF frequencies (i.e. frequencies in the range of from 865 to 928 MHz), if the water freezes, which may result in a higher sensor code. This has the effect that the detection of ice becomes possible.

It is further preferred that said sensor also detects temperature. In combination with the detection of water, it becomes possible to compare the measured temperature and presence with water with known values such as reference values, prefereably reference reactance and temperature values, which allows for the prediction of the formation of ice on said surface.

Preferably, said sensor is a passively operating sensor, more preferably a batteryless sensor. "Passively operating" and "passive" circuit may be used interchangeably in the present context and have the meaning commonly used in the art. Using a passive operating sensor has the advantage that no means for providing electric energy such as batteries or wiring needs to be present. This has further advantages such as less complexity of the system, the system being less prone to damages or malfunctions, and a generally lighter and more compact sensor.

"Attaching" as used herein has the common meaning in the art, i.e. placing something onto a surface such that it is immobilized on said surface. Attaching may comprising fixing by an adhesive, an adhesive tape which is placed over said sensor and/or said sensor, or by mechanical means such as screws or bolts. The sensor may be part of a tape or plate, preferably a polymeric tape or plate which is then being attached to said surface, preferably adhesively attached to said surface.

In the second step (b), a reader is placed in proximity to the sensor. In general, the reader serves a double function in that it produces and emits an electromagnetical interrogation field at a specific frequency when excited by a connected electronic drive circuitry and, on the other hand, receives and reads the signals emitted by said sensor which has been excited and activated when entering said electromagnetic interrogation field. Typically, said reader either comprises a power source such as a battery or preferably is connected to an electrical power source, such as a power circuit. Preferably, the electromagnetic interrogation field is build up by said reader emitting electromagnetic waves having frequencies in the range of from 700 to 1500 MHz, preferably in the range of from 850 to 950 MHz, and more preferably in the range of from 865 to 928 MHz. "Proximity" in the context of the present disclosure means within a distance in which said electromagnetic interrogation field exists in such a field strength such that the field may excite and activate said at least one sensor. For example, if said at least one sensor including a reactance autotuning integrated circuit is attached to the surface of a wind turbine, it is preferred that the reader is placed in or on the support tower.

In a third step (c), a reference reactance of said sensor is measured with said reader at a selected frequency. It is understood that the selected frequency is comprised within the range of said electromagnetic frequencies emitted by said reader, i.e. preferably in the range of from 700 to 1500 MHz, preferably in the range of from 850 to 950 MHz, and more preferably in the range of from 865 to 928 MHz. The term "reactance" has the meaning commonly used in the technical field of electronics, i.e. "electrical reactance". Electrical reactance is the opposition of a circuit element to a change in current or voltage, due to that element's inductance or capacitance. In the present context, the electrical reactance or reactance is the imaginary part of impedance of said sensor at said selected frequency. That is, a selected frequency is emitted by the reader, excites and actives said sensor including said reactance autotuning circuit, and a reference reactance is measured at said frequency of the sensor, and this reactance is then transponded back to the reader unit.

Fourth step (d) of the method described herein comprises continually monitoring for changes in the reactance of said sensor at said selected frequency, wherein changes to the reactance are digitized by said reactance autotuning integrated circuit. "Continually monitoring" as used herein has the common meaning in the art, i.e. a continuous monitoring of something over an extended period of time. Continually monitoring for changes in the reactance of said sensor at a selected frequency has the advantage that changes in the reactance may be recognized quickly or even immediately. Since changes in said reactance may indicate exposure to physical and/or environmental exposure, a quick reaction to these exposure may be desirable or even essential in order to avoid structural damage to said device, loss of productivity or avoidance of danger for the surrounding of the device as may be the case in the formation of ice on the surface of the blade of a wind turbine. For instance, in a preferred mode of the present disclosure, if a high permittivity material such as water enters into the field lines of the capacitor element of said sensor element, then the capacitance of the antenna part increases which will be compensated by a change of the reactance of the autotuning reactance integrated circuit. This will result in a lower sensor code, i.e. the change of the reactance is digitized by said autotuning integrated circuit. Accordingly, after said entrance of water a second reactance will be measured which is distinct from the reference reactance measured in step (c). If said water located within in the field lines of said capacitor element of said freezes, its permittivity changes, which will result in a higher reactance, i.e. a higher sensor code. That is, by continually monitoring for changes of said reactance over time, it becomes possible to obtain gradients of said reactance. Moreover, it is preferred that step (d) comprises monitoring the sensor code, a received signal strength indication, temperature and a frequency drift. This will have the effect that the prediction of exposure to physical and/or environmental exposure may become more precise. For example, a combination of altered sensor code and lower temperature may indicate the presence of water and, if temperatures are close or even below 0°C, the formation of ice on said sensor surface. Signal strength may increase or decrease over time. A decrease of signal strength may be caused by a sensor damaged by physical exposure, the formation of dust or insects on said surface of said sensor, or even the formation of thick layers of ice on said sensor surface. Similarly, frequency drift may also be indicative of a damaged sensor and/or the presence of material having significant dielectric or magnetic response at the selected frequency.

In step (e) of the method according to the present disclosure, differences between the reference reactance and changes to the monitored reactance are compared to determine if said surface of said device, preferably the surface of a blade of a wind turbine, has been subjected to physical and/or environmental exposure. In the aforementioned example, the changes to the monitored reactance over time will allow to determine that water is present on said sensor element, and that said water has frozen, i.e. ice formation has taken place on said surface of said device. Preferably, parallel to measuring and monitoring a reactance of said sensor, the sensor also measures temperature, and temperature is monitored over time. In the aforementioned example of water drops hitting said sensor area at ambient temperatures below 0 °C, an increase of temperature may be observed due to the presence of water on said surface. When the water freezes on said surface, the sensor may measure a drop of the temperature to the level before said water drops hit said surface. Accordingly, a temperature gradient over time may be obtained. In the present example, the rise and subsequent drop of temperature may additionally indicate the presence of water and subsequent freezing of said water. In combination with the measurement and monitoring of the reactance, a precise method for the detection of water and the formation of ice on surfaces is obtained. Accordingly, the present method is particularly suited for the wireless and automatized monitoring of surfaces, in particular of blades of wind turbines. Advantageously, the method also provides for monitoring a great number of sensors at the same time. For example, every blade of a wind turbine may be monitored, or even a great number of wind turbines such as a so-called off-shore wind park may be monitored at the same time. This has significant economical advantages.

It is also preferred that the method according to the present disclosure further comprises a step (e), the step comprising displaying the sensor code, and preferably also temperature, signal strength, and frequency drift. Displaying may be carried out by any means known in the art. Displaying may comprise displaying by means of a computer monitor to which the sensor code and preferably also temperature, signal strength and frequency drift has been transmitted to from said reader. Transmission may involve transmission via cable or without cables, i.e. by means of electromagnetic waves over a distance. Displaying may also involve computer programs. Displaying said information may involve a computer monitor on a fixed location, or a computer monitor in a vehicle such as a car, aircraft or ship which may be advantageous when said sensor is placed on a surface of a rotor blade of a wind turbine, and said wind turbine is located on a remote location such as an off-shore wind park. Moreover, displaying may advantageously be carried out by hand-held devices. Hand-held devices may comprise portable computers such as so-called notebooks, portable display devices, or even mobile phones. Moreover, displaying may involve displaying the information transmitted by at least one sensor, more than one of the sensors applied onto said surface(s), or of all of said sensors monitored. For instance, if a wind turbine comprising three rotor blades to which at least one or a plurality of sensors has been attached to is being monitored for physical and/or environmental exposure with the method described herein

A "wind turbine" as used herein describes a wind turbine as commonly known in the art. Generally, a "wind turbine" as used in the art comprises a plurality of blades mounted to a rotor shaft of a turbine assembly supported atop of a tower support. As commonly known, at least two blades are mounted to said rotor shaft, while three blades are most often used in present wind turbine assemblies. The size of the wind turbine including tower support and blades is not particularly limited. For example, blade lengths may vary from about 0.5 m to about 30 m. However, since blades and support towers have increased considerably in size over the last few decades, no upper limit of blades and corresponding wind turbines in general may be estimated today. Since the method as described herein is particularly suited for monitoring the surfaces of blades of wind turbines, it is preferred that the device as described herein is a blade of a wind turbine. It is also preferred that said reader is installed on the support tower of a wind turbine. Since a blade of a wind turbine according to the present state of the art may have considerable dimensions, it is desirable to monitor a maximum of the surface to physical and/or environmental exposure such as erosion, rain (i.e. presence of water) and in particular the formation of ice. Accordingly, it is preferred that a plurality of said senor including said reactance autotuning circuit is placed on said surface of said blade. A plurality may comprise at least two sensors, at least three sensors, at least four sensors, at least 6 sensors, at least 8 sensors, at least 10 sensors, at least 12 sensors, at least 15 sensors, or even a least 20 sensors, or even at least 50 sensors. This number may also depend on the size of the corresponding blade.

Preferably, at least one sensor is part of a tape which is preferably adhesively attached to said surface of said blade. If there is more than one sensor, each of said sensors may be part of separate tapes, or may even be part of one common tape. Since the leading edge of a blade of a wind turbine or a rotor blade of an helicopter usually suffer the most impact from physical and/or environmental exposure, it is preferred that the at least one sensor is attached to said leading edge. In this regard, it is preferred that the at least one sensor is part of a tape which is adhesively attached to said surface. The sensors may be attached on positions having a distance to each other corresponding to about one third of said blade, about one quarter of said blade, about one fifth of said blade, about one sixth of said blade, about one seventh of said blade, about one eighth of said blade, about one ninth of said blade, or even about one tenth of said blade, including a position corresponding to the tip of said blade. It is further preferred that said tape further exhibits protective properties, such as erosion inhibition properties. The tape may comprise said at least one sensor unit, a protective polymeric layer, an adhesive layer, and may further comprise at least one liner.

Another object of the present disclosure is a sensing system for carrying out the method as described herein. Accordingly, the sensing system comprises
(i) At least one sensor including a reactance autotuning integrated circuit;
(ii) At least one reader configured to measure a reactance of the sensor at a selected frequency;
(iii) A processor configured to determine differences of reference reactances.

It is understood that the sensor and reader are the same which were defined above under the method according to the present disclosure. Moreover, it is further understood that it is preferred that said at least one reader is preferably attached to a surface of a device, preferably a rotor blade of an helicopter or a wind turbine. Accordingly, it is preferred that said reactance autotuning integrated circuit comprises adapting the impedance of the sensor circuit to the influence of at least one physical and/or environmental exposure. It is also preferred that each of said at least one sensors of said sensing system has its own sensor code and transmits said sensor code to said reader.

Preferably, said sensor is further configured to measure temperature. The reactance measured by the sensing system as described herein may be the reactance or its gradient. The selected frequency used in the sensing system as described herein may be in the range of from 700 to 1500 MHz, preferably in the range of from 850 to 950 MHz, and more preferably in the range of from 865 to 928 MHz. It is further preferred that said sensor used in the sensing system as described herein is a passively operating sensor, preferably a batteryless operating sensor.

### Description of figures

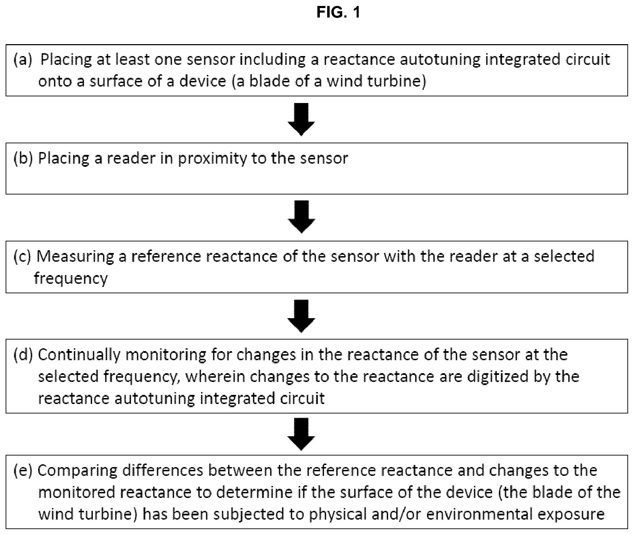

Fig. 1 shows in a flow-chart the process according to the present disclosure. In the first step (a), at least one sensor including a reactance autotuning integrated circuit is attached to a surface of a device, preferably a rotor of an helicopter or a blade of a wind turbine. In the subsequent step (b), a reader is attached in proximity to the sensor. Next, in step (c), a reference reactance of the sensor is measured with the reader at a selected frequency. Step (d) comprises continually monitoring for changes in the reactance of the sensor at the selected frequency, wherein changes to the reactance are digitized by the reactance autotuning integrated circuit. Finally, step (e) comprises comparing differences between the reference reactance and changes to the monitored reactance to determine if the surface of the device, preferably the rotor blade of an helicopter or the blade of a wind turbine, has been subjected to physical and/or environmental exposure.
Fig. 2 depicts an example of a commercially available radio identification tag. It can be observed that at resonance the magnetic field is concentrated at the center of the tag, which is highlighted as "sensitive area" to magnetic materials.
Fig. 3 shows exemplary the auto-tuning sensing principle as used by the method as described herein. To the left, the circuitry of said reactance autotuning integrated circuit is shown. It comprises the sensitive antenna part (A) and the adaptive circuitry (chip). The input stage of the integrated circuit is equipped with a variable input capacitor, which allows for optimizing the impedance matching to the connected RFID antenna/sensor structure. To the right, fig. 3 illustrates the matching model and the resulting return loss for all possible input capacitances of the chip. The autotuning function of the chip minimizes the loss and saves the encoded/digital value of the capacitance in the memory of the chip. This allows indirect measuring of changes of the antenna/sensor impedance.

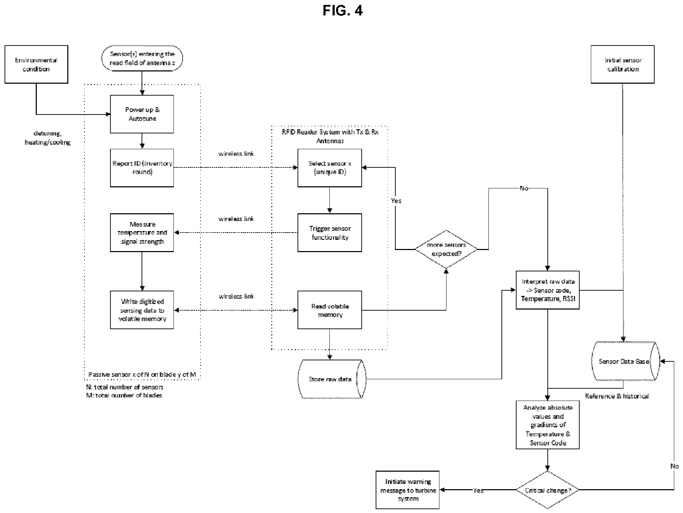

In Fig. 4, a flow-chart shows an exemplary embodiment of the method according to the present disclosure, applied to a turbine system such as a wind turbine. To the left, a passive sensor x of N on blade y of M is shown, wherein N stands for the total number of sensors and M the total number of blades. Y is a particular blade of M. In the middle of the chart, an RFID reader system with Tx and Rx antennas is shown. The sensor(s) and the RFID reader system are connected via a wireless link. Initially, an initial sensor calibration takes places, and the data are stored into the Sensor Data Base. When said sensor(s) enter the read field of antenna z, they power up and autotune to the environmental condition, which may give rise to a detuning and additionally a heating or cooling. After powering up and autotuning, the sensor will report its ID (inventory round) via the wireless link to the RFID reader system, where the sensor x is selected according to its unique ID. The RFID reader system will then trigger the sensor functionality via the wireless link, i.e. the sensor measuring temperature and signal strength. The sensor writes these data into a volatile memory, which is read out by the RFID reader system. If no further sensor(s) are expected, the raw data are transferred to a processor, which interprets the raw data (i.e. sensor code, temperature, RSSI) and compares it to reference and historical values stored in said sensor data base. The processor analyses absolute values and gradients of temperature and sensor code. Based on this, it may be decided whether or not a critical change has taken place. For instance, the detection of water by a respective change in sensor code together with a drop of temperature to values at which water may freeze may indicate the danger of ice formation on said surface of the blade of the wind turbine. If critical changes are detected, a warning message may be send to the turbine system.

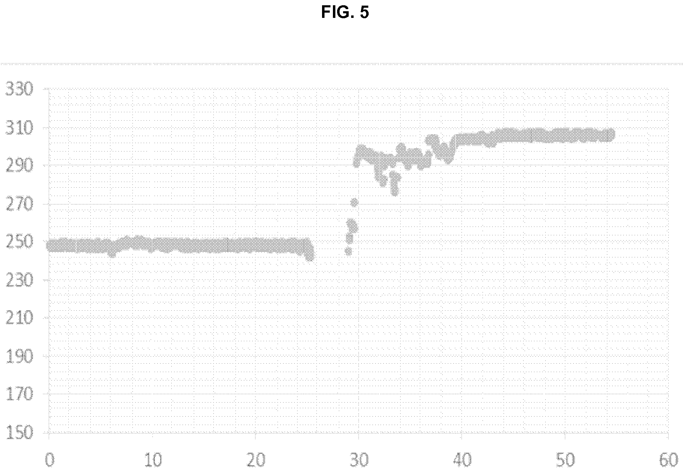

Fig. 5 exemplary depicts a sensor code change when material erosion occurs. The x-axis represents the time in seconds, the y-axis represents the sensor code.

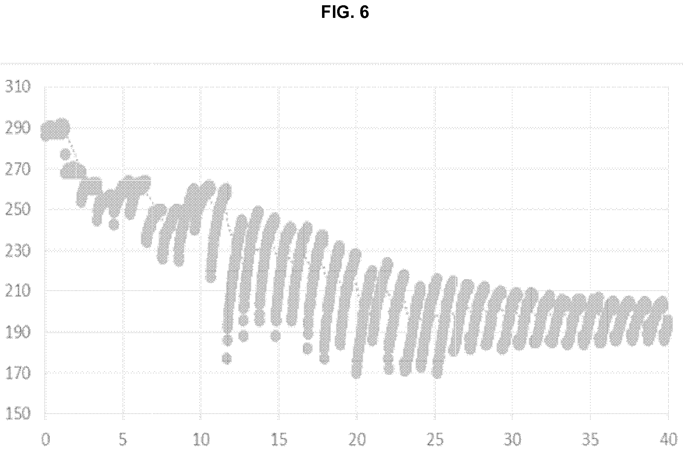

Fig. 6 shows an example of sensor code response to freezing drizzle exposure. As in fig. 5, time in seconds is used as the x-axis, whereas the y-axis represents the sensor code.

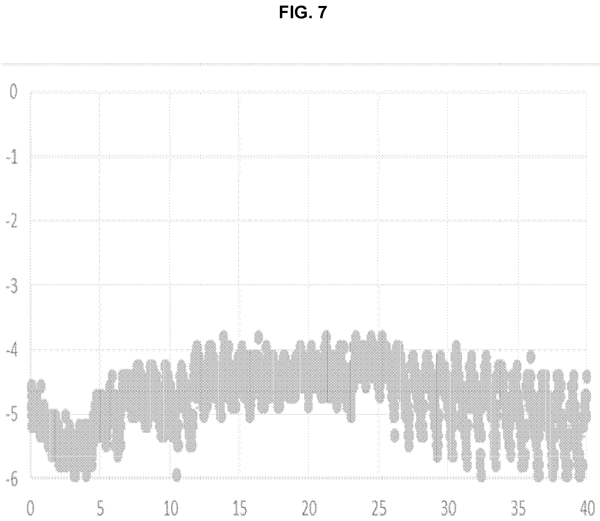

Similarly, Fig. 7 shows an example of sensor temperature response to freezing drizzle exposure. Again, the x-axis of this graph represents the time in seconds, whereas the y-axis is the temperature measured by the sensor in °C.

## Claims

1. A method for monitoring the surface of a device to physical and/or environmental exposure, the method comprising:
(a) Attaching at least one sensor including a reactance autotuning integrated circuit to a surface of a device;
(b) attaching a reader in proximity to the sensor;
(c) measuring a reference reactance of the sensor with the reader at a selected frequency;
(d) continually monitoring for changes in the reactance of the sensor at the selected frequency, wherein changes to the reactance are digitized by the autotuning circuit; and
(e) comparing differences between the reference reactance and changes to the monitored reactance to determine if said surface of the device has been subjected to physical and/or environmental exposure.

2. The method according to claim 1, wherein the selected frequency is in a frequency in the range of from 700 to 1500 MHz, preferably in the range of from 850 to 950 MHz, more preferably in the range of from 865 to 928 MHz.

3. The method according to claim 1 or claim 2, wherein in step (c) further temperature is measured by the sensor and step (d) further includes monitoring the temperature and changes of temperature.

4. The method according to any one of the preceding claims, wherein the reactance is absolute reactance or its gradient.

5. The method according to any one of the preceding claims, wherein the physical or environmental exposure is selected from physical damage and exposure to weather conditions and any combinations thereof.

6. The method according to any one of the preceding claims, wherein the reactance autotuning integrated circuit comprises adapting the impedance of the sensor circuit to the influence of the physical and/or environmental exposure.

7. The method according to any one of the preceding claims, wherein the sensor circuit comprises at least one antenna, preferably a dipole antenna, and at least one sensing capacitor or at least one sensing inductor or a combination of the sensing capacitor and the sensing inductor.

8. The method according to any one of the preceding claims, wherein the device is part of a wing of an aircraft or a blade of a wind turbine.

9. The method according to any one of the preceding claims, wherein the device is a blade of a wind turbine, the reader is installed on the tower of the wind turbine and a plurality of said sensors is attached on said surface.

10. The method according to any one of the preceding claims, wherein a tape comprising a plurality of said sensors is placed to said surface. Preferably wherein said tape is adhesively attached to said surface.

11. The method according to claim 10, wherein said tape is attached to at least of a portion of the leading edge of said part of a wing of an aircraft or of said blade of a wind turbine.

12. The method according to claim 10 or claim 11, wherein said tape comprises at least one layer comprising at least one polymeric layer and at least one adhesive layer, preferably a self-adhesive layer.

13. The method according to any one of the preceding claims, wherein monitoring in step (d) comprises observing the sensor code, a received signal strength indication, temperature and a frequency drift.

14. The method according to any one of the preceding claims, further comprising a step (f) displaying the sensor code, signal strength, temperature, and frequency drift.

15. A sensing system, comprising
(i) At least one sensor including a reactance autotuning integrated circuit;
(ii) At least one reader configured to measure a reactance of the sensor at a selected frequency;
(iii) a processor configured to determine differences of reference reactances.
